# EUROPEAN PATENT SPECIFICATION

(11) **EP 0 661 879 B1**
(45) Date of publication and mention of the grant of the patent: **02.05.2002**
(21) Application number: 94309632.1
(22) Date of filing: 21.12.1994
(51) Int. Cl.: H04N 7/087, H04N 7/088, G09G 5/24

(54) **Method and device for auto-time setting utilizing broadcasting signal**
Verfahren und Einrichtung zur automatischen Zeiteinstellung mit Anwendung eines übertragenen Signals
Méthode et dispositif pour régler l'heure automatiquement en utilisant un signal transmis

(30) Priority: 30.12.1993 KR 3152493; 03.02.1994 KR 2043000094
(43) Date of publication of application: 05.07.1995
(73) Proprietor: LG ELECTRONICS INC., Seoul (KR)
(72) Inventor: Huh, Chung Hyoea, Suwon-si, Kyungki-do (KR)
(74) Representative: Cross, Rupert Edward Blount

(56) References cited:
- EP-A- 0 355 567
- EP-A- 0 368 313
- EP-A- 0 607 814
- US-A- 4 993 003

## Description

### FIELD OF THE INVENTION

This invention relates to a method and device for auto-time setting utilizing broadcasting signal which can set the present time automatically utilizing broadcasting signals of teletext and video program system.

### BACKGROUND OF THE INVENTION

In general, setting of the present time for a VCR or a TV is carried out according to the control of an user using OSD(On Screen Display) or LCD(Liquid Crystal Display) remote controller.

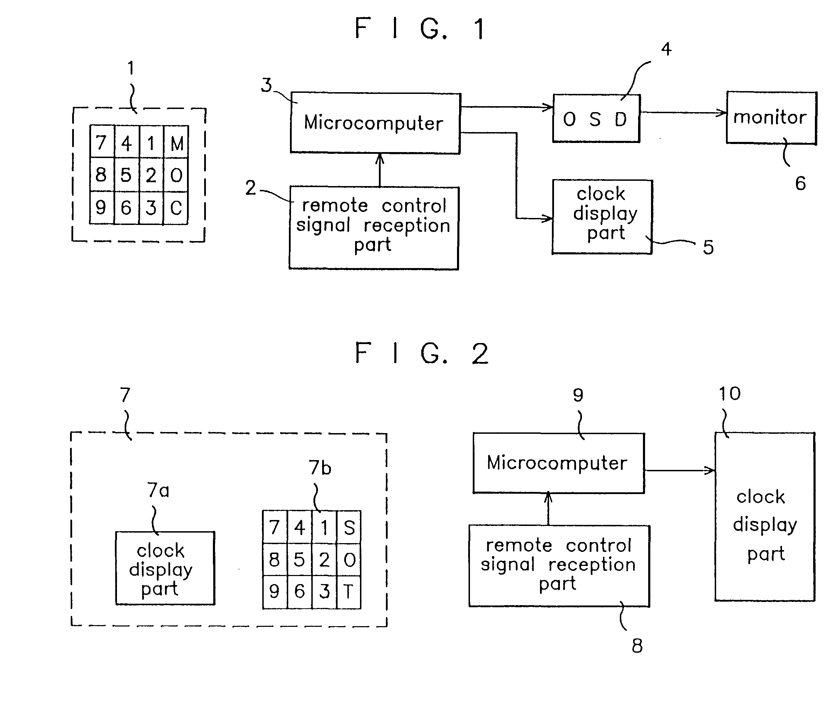

The present time setting device using OSD includes, as shown in FIG.1, a remote controller 1 controlled by an user for time setting, a remote controller signal reception part 2 for receiving signals from the remote controller 1, a microcomputer 3 for converting the signals received from the remote controller signal reception part 2 into letters and numbers displayable for the OSD, an OSD part 4 for displaying the letters and numbers on a screen under the control of the microcomputer 3, a monitor 6 for displaying the signals received from the OSD 4, and a clock display part 5 for displaying the present set time and date under the control of the microcomputer 3.

The signals generated at the remote controller 1 by pressing keys on the remote controller 1 for setting the present time are transmitted to the microcomputer 3 through the remote controller signal reception part 2, converted into letters and numbers at the microcomputer 3, and displayed on the monitor 6 through the OSD part 4. The present time and date can also be displayed on the clock display part 5 by setting the present time and date through repeating the foregiong processes and, upon completion of the setting of the present time and date, controlling the clock display part 5 under the control of the microcomputer 3.

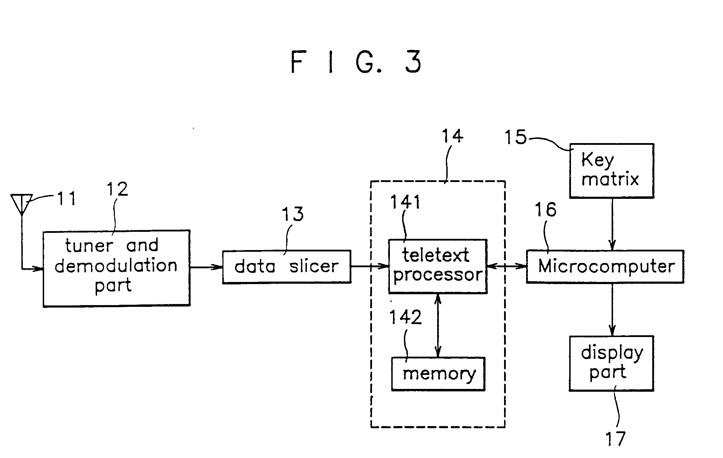

And the present time setting device using an LCD remote controller includes, as shown in FIG.2, an LCD remote controller 7 having a clock display part 7a and a key matrix 7b for displaying the set present time and date, a remote controller signal reception part 8 for receiving remote control signals from the LCD remote controller 7, a microcomputer 9 for receiving signals from the remote control signal reception part 8 to control the present time and date setting, and a clock display part 10 for displaying the set present time and date under the control of the microcomputer 9.

Upon pressing time and date setting keys S, the LCD remote controller is switched into a time and date setting mode, and upon setting the present time and date with the numeric keys, the set present time and date is displayed on the clock display part 7a. Upon finishing setting of the present time and date, signals for the present time and date are applied to an appliance such as a TV or a VCR desired to be set of time by pressing a transmission key T. The applied signals of the present time and date are transmitted to the microcomputer 9 through the remote control signal reception part 8, and displayed on the clock display part 10 under the control of the microcomputer 9.

However, such a conventional time setting device has such a problem that a user should correct time error developed as time elapses, and summer time and winter time, manually.

Document US 4,933,003 discloses a method for automatically setting the clock time on, for example, a television or a video recorder unit. Time data transmitted as teletext information is decoded and compared to the clock time, any discrepancy being used to correct the clock.

### SUMMARY OF THE INVENTION

It would be desirable to provide a method and a device for auto-time setting utilizing broadcasting signals which can set time automatically using information on the present time and date teletext or VPS broadcasting signal carries.

Accordingly, the present invention provides an auto-time setting device comprising a tuner and demodulation means for synchronizing, receiving and demodulating broadcasting signals; a data slicing means for slicing teletext data in package units of the data received from the tuner and demodulation means; a teletext processing means for converting the teletext data received from the data slicing means into literal and numeric data; a first microcomputer for controlling the teletext processing means and setting the present time with the literal and numeric data received from the teletext processing means; a second microcomputer for searching the data received from the teletext processing means for any errors so as to apply the data to the first microcomputer on finding no errors and inform development of errors to the first microcomputer on finding any errors; and a phase locked loop for controlling the tuner and demodulation means to change synchronization frequency under the control of the first microcomputer on receiving signals informing of the development of errors from the second microcomputer.

### BRIEF DESCRIPTION OF THE DRAWINGS

FIG. 1 is a conventional time setting device.
FIG. 2 is another conventional time setting device.
FIG. 3 shows an example auto-time setting device.
FIG. 4 is an auto-time setting device in accordance with an embodiment of this invention.
FIG. 5 shows an example auto-time setting device.
FIG. 6 is a flow diagram of an example auto-time setting method.
FIG. 7 is a detailed flow diagram of an example auto-time setting method.

### DETAILED DESCRIPTION OF THE INVENTION

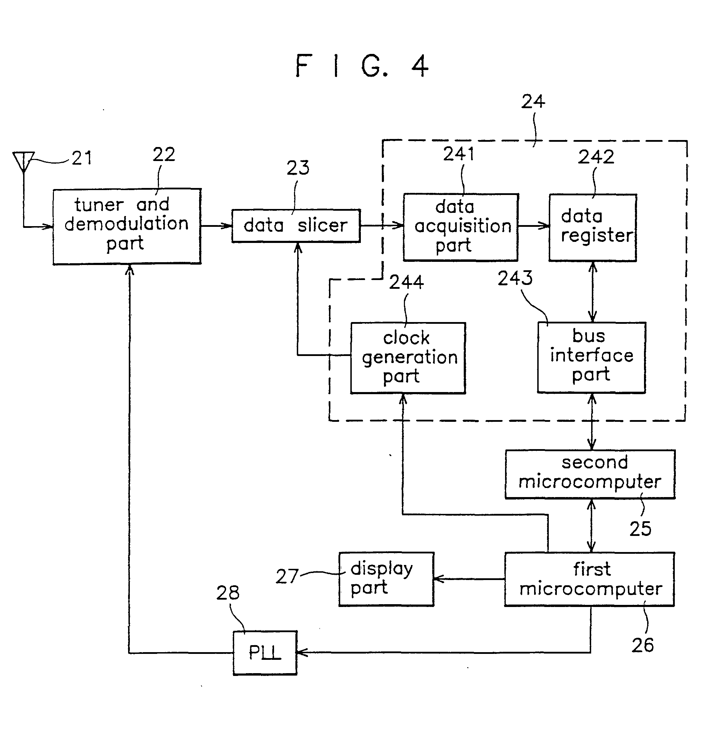

An example of auto-time setting device includes, as shown in FIG. 3, an antenna 11, a tuner and a demodulation part 12, a data slicer 13, a teletext processing part 14, a microcomputer 16, a key matrix part 15, and a display part 17.

The antenna 11 receives broadcasting signals, the tuner and demodulation part 12 synchronizes and receives the broadcasting signals and demodulates the broadcasting signals into composite video signals, and the data slicer 13 detects the teletext data from the signals received from the tuner and demodulation part 12 and slices the detected teletext data in package units.

The teletext processing part 14 includes a teletext processor 141 for converting the teletext data received from the data slicer 13 into literal and numeric data under the control of the microcomputer 16 and a memory 142 for storing the teletext data in package units under the control of the teletext processor 141, thereby converts the teletext data received from the data slicer 13 into literal and numeric data and transmits the literal and numeric data to the microcomputer 16.

The microcomputer 16 controls the teletext processing part 14 and sets the present time based on the literal and numeric data received from the teletext processing part 14, and the display part 17 displays the present time set under the control of the microcomputer 16.

The key matrix part 15 connected to the microcomputer 16 is used for manual setting of the present time and for ordering setting of the present time as a user needs.

Operation of the foregoing auto-time setting device is to be explained hereinafter.

Broadcasting signals, received through the antenna 11 and converted into composite video signals at the tuner and demodulation part 12, are transmitted to the data slicer 13 to detect teletext data only and slice the detected teletext data in package units.

In general, the teletext data transmitted in package units each having 40 byte includes 32 packages in total having 30 packages from a first package(package 0) to 29th package(package 29) and additional 2 packages of 8/30 package and 8/31 package, wherein the first package(package 0) i.e., headline carries information on time and the 8/30 package carries information on date. The information on date carried in the 8/30 package may not be carried depending on broadcasting stations, especially, German broadcasting stations do not load date information on package 8/30.

When a user orders setting of the present time through the key matrix part 15, the microcomputer 16 controls the teletext processor 141 to store the teletext data with an assignment of address. Accordingly, the received teletext data sliced in package units is stored into the memory 142 under the control of the teletxt processor 141. When the microcomputer 16 generates the addresses corresponding to teletext data of the first package(package 0) and package 8/30 carrying information on time and date of the stored teletext data and applies the addresses to the teletext processor 141, the teletext processor 141, under the control of the microprocessor 16, reads in the data corresponding to the addresses from the memory 142 and converts the data into literal and numeric data. The converted literal and numeric data ,applied to the microcomputer 16, is displayed on the display part 17.

When the present time setting signal is generated at the key matrix part 15 in order to control setting of the present time, the microcomputer 16 controls the teletext processing part 14 to transmit literal and numeric data to the microcomputer 16, and sets the present time based on the literal and numeric data. Further, the microcomputer 16 can remove errors on time and date by controling the teletext processing part 14 to transmit literal and numeric data to the microcomputer 16 and setting the present time and date based on the literal and numeric data, periodically.

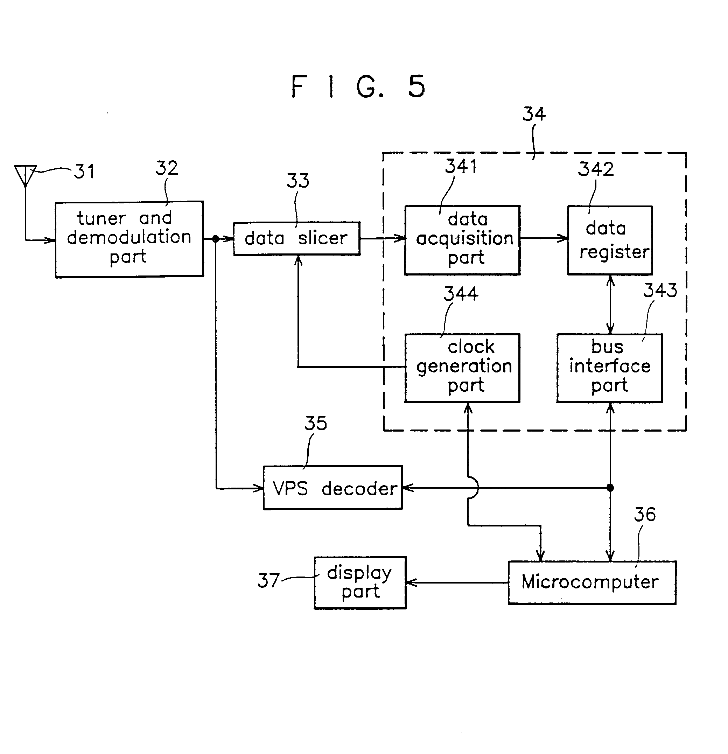

An auto-time setting device in accordance with an embodiment of this invention includes, as shown in FIG.4, an antenna 21, a tuner and demodulation part 22, a data slicer 23, a teletext processing part 24, a first microcomputer 26, a second microcomputer 25, a display part 27, and a PLL(Phase Locked Loop) 28.

The antenna 21 receives broadcasting signals transmitted, the tuner and demodulation part 22 receives the broadcasting signals synchronized to the broadcasting signals according to the PLL 28 and demodulates the broadcasting signals into composite video signals, the data slicer 23 detects the teletext data of the first package carrying information on time of the signals received from the tuner and demodulation part 22 and slices the data according to the clocks received from the clock generation part 244 of the teletext processing part 24.

The teletext processing part 24 includes a clock generation part 244 for generating clocks and applying the clocks to the data slicer 23 under the control of the first microcomputer 26 making the slicer 23 only slice the teletext data of the first package and package 8/30 containing data on time and date, a data acquisition part 241 for converting the teletext data received from the data slicer 23 into literal and numeric data, a data register for storing the literal and numeric data received from the data acquisition part 241 and transmitting the stored data under the control of the first microcomputer 26, and a bus interface part 243 for carrying out interface function of the data and control signals between the first microcomputer 26 and the data register 242, thereby converts the teletext data received from the data slicer 23 into literal and numeric data and applies the literal and numeric data to the first microcomputer 26 under the control of the first microcomputer 26.

The first microcomputer 26 controls the teletext processing part 24, sets the present time and date based on the literal and numeric data received from the teletext processing part 24, and controls the PLL 28 under the control of the second microcomputer 25.

The display part 27 displays the set present time under the control of the first microcomputer 26.

The second microcomputer 25 searches the data received from the bus interface part 243 on any error, wherein, if there are no errors found, the data received from the bus interface part 243 are applied to the first microcomputer 16 as it is, while if any errors found, the first microcomputer 26 is informed of development of errors.

If signals informing of the development of errors are applied from the second microcomputer 25 to the first microcomputer 26, the PLL 28 controls the tuner and demodulation part 22 to change synchronization frequency under the control of the first microcomputer 26.

Operation of the foregoing auto-time setting device in accordance with an embodiment of this invention is to be explained hereinafter.

First, for setting the present time, the first microcomputer 26 controls the clock generation part 244 to generate clocks to enable to receive the teletext data of the first package and the package 8/30.

Of the composite video signals produced through the antenna 21 and the tuner and demodulation part 22, only the teletext data of the first package carrying information on time is detected and sliced at the data slicer 23 according to the clocks received from the clock generation part 244.

The sliced teletext data of the first package is converted into literal and numeric data at the data acquisition part 241, and stored in the data register 243 temporarily. The literal and numeric data stored in the register 243 is applied to the second microcomputer 25 through the bus interface part 243 under the control of the first microcomputer 26 through the bus interface part 243.

The literal and numeric data transmitted through the bus interface part 243 to the second microcomputer 25 is searched for any errors therein. That is, the result of search whether the data transmitted to the first microcomputer 26 through the register 243 and the bus interface part 243 is actually literal and numeric data representing a time or not is informed to the first microcomputer 26.

As the result of the search at the second microcomputer 25, if there are no errors found in the literal and numeric data received from the bus interface part 243, the literal and numeric data received from the bus interface part 243 are applied to the first microcomputer 26, used to set the present time and date therein, and displayed on the display part 27.

And as the result of the search of the second microcomputer 25, if there are any errors found in the literal and numeric data received from the bus interface part 243, the literal and numeric data received from the bus interface part 243 are not applied to the first microcomputer 26, but an error development signal informing development of errors are generated in the second microcomputer 25 and applied to the first microcomputer 26. According to the applied error development signal, the first microcomputer 26 controls the PLL 28 to generate a control signal for changing the synchronization frequency, which in turn changes the frequency synchronization signal of the tuner and demodulation part 22 resulting to change reception frequency of broadcasting signals.

Then, process for setting the present time and date can be carried out continuously by producing composite video signals at the tuner and demodulation part 22 with the broadcasting signals received based on the changed synchronization frequency and processing the teletext data of the first package and the package 8/30 as the foregoing process.

The first microcomputer 26 controls the teletext processing part 24 periodically such that errors on the present time and date can be removed by setting the present time and date based on the literal and numeric data received from the teletext processing part 24. Also, by connecting the key matrix part to the first microcomputer 26, it is possible to set the present time and date as a user wanted.

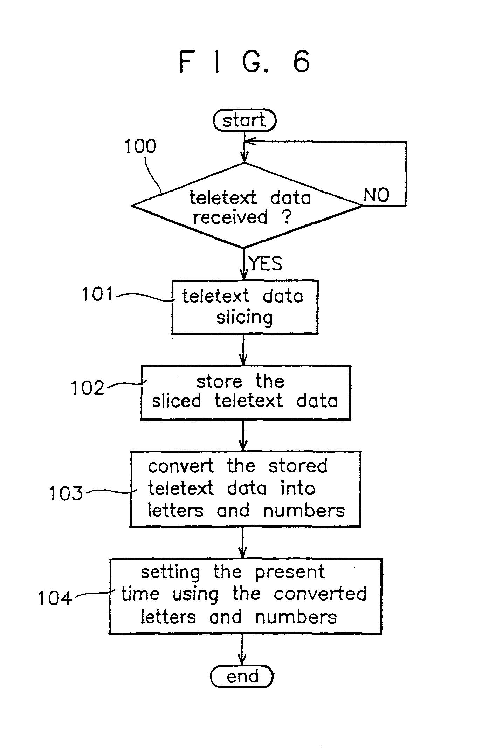

Another example auto-time setting device includes, as shown on FIG.5, an antenna 31, a tuner and demodulation part 32, a data slicer 33, a teletext processing part 34, a microcomputer 36, a VPS decoder 35 and a display part 37, thereby enables to set the present time and date, wherein, in case there is no transmission of information on the date in the package 8/30 of the teletext data, the present date can be set utilizing VPS(Video Program Signal).

The antenna 31 receives broadcasting signals transmitted, the tuner and demodulation part 32 synchronizes and receives the broadcasting signals and demodulates the broadcasting signals into composite video signals, the data slicer 33 detects the teletext data of the first package carrying information on time of the signals received from the tuner and demodulation part 32 and slices the data according to the clocks received from the clock generation part 344 of the teletext processing part 34.

The teletext processing part 34 includes a clock generation part 344 for generating clocks and applying the clocks to the data slicer 33 under the control of the microcomputer 36 making the slicer 33 only slice the teletext data of the first package containing data on time, a data acquisition part 341 for converting the teletext data received from the data slicer 33 into literal and numeric data, a data register 342 for storing the literal and numeric data received from the data acquisition part 341 and transmitting the stored data under the control of the microcomputer 36, and a bus interface part 343 for carrying out interface function of the data and control signals between the microcomputer 36 and the data register 342, thereby converts the teletext data received from the data slicer 33 into literal and numeric data and applies the literal and numeric data to the microcomputer 36 under the control of the microcomputer 36.

The VPS(Video Program Signal) decoder 35 carries out decoding of the VPS data of the data received from the tuner and demodulation part 32, and transmits the data representing the present date to the microcomputer 36 to enable to set the present date.

The microcomputer 36 controls both the teletext processing part 34 and the VPS decoder 35, sets the present time and date based on the literal and numeric data representing the present time and date received from the teletext processing part 34 and the VPS decoder 36 respectively.

The display part 37 displays the set present time and date under the control of the microcomputer 36.

Operation of the foregoing auto-time setting device is to be explained hereinafter.

First, for setting the present time, the microcomputer 36 controls the clock generation part 344 to generate clocks to enable to receive the teletext data of the first package and the package 8/30.

Of the composite video signals produced through the antenna 31 and the tuner and demodulation part 32, only the teletext data of the first package carrying information on time is detected and sliced at the data slicer 33 according to the clocks received from the clock generation part 344.

In this instant, if it is not sure that the package 8/30 is carrying information representing date, it is possible to make it sure by detecting and slicing all of the data of the first package and the package 8/30 and searching the package 8/30 for the information on date, and carry out the required process based on the result of the search. That is, if it is found that there is information on date carried by the package 8/30, VPS is not used, and if it is found that there is no information on date carried by the package 8/30, VPS is used.

The sliced teletext data of the first package is converted into literal and numeric data at the data acquisition part 341, and stored in the data register 343 temporarily. The literal and numeric data stored in the register 343 is applied to the microcomputer 36 through the bus interface part 343 under the control of the microcomputer 36 through the bus interface part 343. The literal and numeric data received from the bus interface part 343 are applied to the microcomputer 36 and used to set the present time and date therein, and displayed on the display part 37.

And, composite video signals received from the tuner and demodulation part 32 is coverted into data representing the present date by detected and decoded of VPS data at the VPS decoder 35. Data representing the present date is applied to the microcomputer 36 together with the literal and numeric data representing the present time received from the bus interface part 343, based on which data the present time and date is set in the microcomputer 26 and displayed on the display part 37.

Operational processes of an example auto-time setting method is to be explained hereinafter, referring to FIG.6.

First, teletext data carried by broadcasting signals is received, and upon reception of the teletext data, a teletext data processing step for slicing the teletext data in package units is carried out(100 and 101). After carrying out the teletext data processing step, a teletext data storing step(102) for storing the sliced teletext data in package units is carried out. After carrying out the teletext data storing step, a present time setting step(103 and 104) is carried out for setting the present time using the stored teletext data. That is, the stored data is converted into literal and numeric data, and using the converted literal and numeric data, the present time is set.

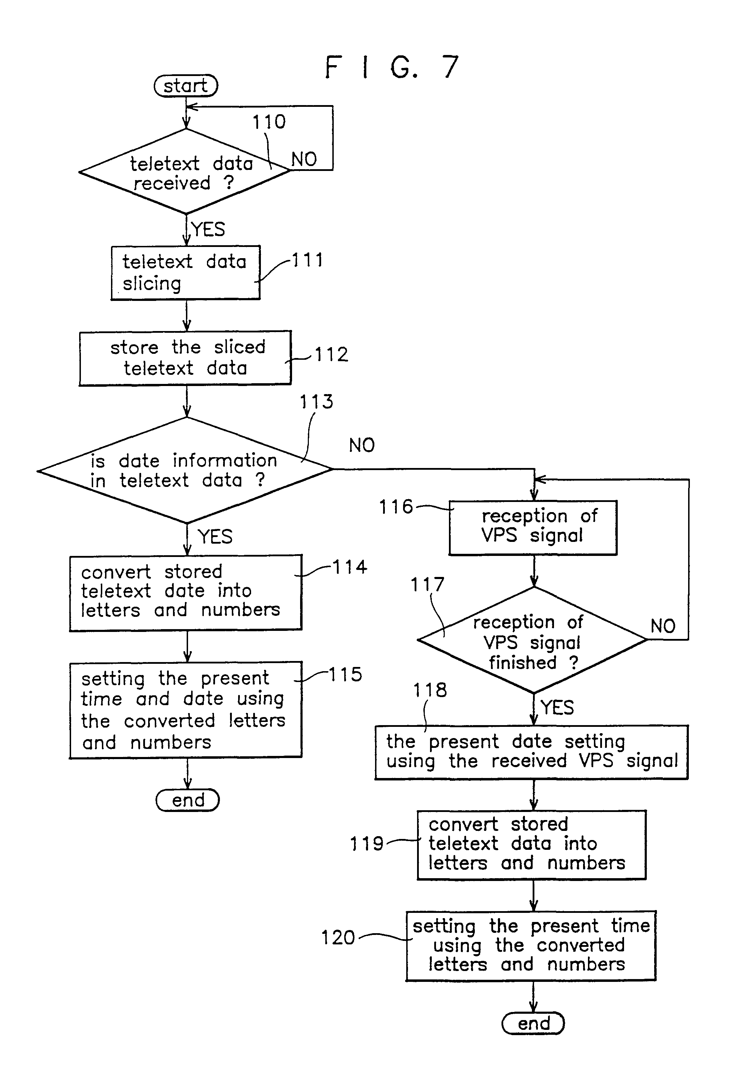

Operational processes of an example auto-time setting method is to be explained hereinafter in detail, referring to FIG.7.

First, that teletext data carried by broadcasting signals is received, and upon reception of the teletext data, a teletext data processing step for slicing the teletext data in package units is carried out(110 and 111) and after carrying out the teletext data processing step, a teletext data storing step(112) for storing the sliced teletext data in package units is carried out, is the same with the teletext data processing step(100 and 101) and the teletext data storing step(102) of FIG.6.

The present time setting step(103 and 104) after the foregoing steps includes a teletext data searching step(113) for searching the teletext data for date information, a time and date setting step using teletext data(114 and 115) for setting the present time and date using the stored teletext data in case the teletext data found to contain date information as the result of carrying out the teletext data searching step, and a time and date setting step using teletext data and VPS signals(116, 117, 118, 119, and 120) for setting time using stored teletext data and setting date by receiving VPS signals in case the teletext data found to have no date information as the result of carrying out the teletext data searching step(113).

Herein, the teletext data searching step(113) is carried out by searching the data of package 8/30 of the teletext data for information on date, especially, searching the data of format 1 carrying information on date.

The reason for carrying out the teletext data searching step(113) is to use VPS signals in case the teletext data found not carrying information on date.

As the result of the search, the teletext data found carrying information on date, the stored teletext data is converted into literal and numeric data(114), using which data the present time and date is set(115).

And as the result of the search, the teletext data found not carrying information on date, VPS signals(116 and 117) are received, and using which received VPS signals the present date is set(118) and the stored teletext data is converted into literal and numeric data(119), using which data the present time and date is set(120).

Thus, the described devices and methods have advantages of eliminating inconvenience of users at manual setting and correcting clock devices by facilitating automatic setting and correcting of clock devices of VCRs and TVs using time and date information contained in teletext data and VPS data carried by any broadcasting signals available.

Although the invention has been described in conjunction with a specific embodiment, it is evident that many alternatives and variations will be apparent to those skilled in the art in light of the foregoing description. Accordingly, the invention is intended to embraace all of the alternatives and variations that fall within the scope of the appended claims.

## Claims

1. An auto-time setting device comprising:
a tuner and demodulation means (22) for synchronizing, receiving and demodulating broadcasting signals;
a data slicing means (23) for slicing teletext data in package units of the data received from the tuner and demodulation means;
a teletext processing means (24) for converting the teletext data received from the data slicing means into literal and numeric data;
a first microcomputer (26) for controlling the teletext processing means and setting the present time with the literal and numeric data received from the teletext processing means;
a second microcomputer (25) for searching the data received from the teletext processing means (24) for any errors so as to apply the data to the first microcomputer (26) on finding no errors and inform development of errors to the first microcomputer on finding any errors; and
a phase locked loop (28) for controlling the tuner and demodulation means (22) to change synchronization frequency under the control of the first microcomputer (26) on receiving signals informing of the development of errors from the second microcomputer (25).

2. The auto-time setting device as claimed in Claim 1, further including a key matrix means (15) connected to the first microcomputer (26), said key matrix means enabling a user to set the present time manually.

3. The auto-time setting device as claimed in Claim 2, wherein the first microcomputer (26) controls the teletext processing means (24) to transmit the literal and numeric data according to the present time setting signal received from the key matrix means (15) and sets the present time based on the literal and numeric data received from the teletext processing means (24).

4. The auto-time setting device as claimed in Claim 1, wherein the teletext processing means (24) includes a teletext processing (141) for converting the teletext data in package units received from the data slicing means into literal and numeric data under the control of the first microcomputer and a memory (142) for storing the teletext data in package units under the control of the teletext processor.

5. The auto-time setting device as claimed in Claim 1, wherein the first microcomputer (26) removes errors in time and date by controlling the teletext processing means (24) to apply literal and numeric data to the first microcomputer and setting the present time and date based on the literal and numeric data received from the teletext processing means, periodically.

6. The auto-time setting device as claimed in Claim 1, wherein the teletext processing means (24) includes:
a clock generation means (244) for generating clocks and applying the clocks to the data slicing means to slice only the teletext data containing data on time under the control of the first microcomputer (26);
a data acquisition means (241) for converting the teletext data received from the data slicing means into literal and numeric data;
a data register (242) for storing the literal and numeric data received from the data acquisition means and transmitting the stored data under the control of the first microcomputer; and
a bus interface means (243) for carrying out interface function of the data and control signals between the first microcomputer and the data register, the second microcomputer (25) being arranged to search the data received from the bus interface for any errors.

7. The auto-time setting device as claimed in Claim 6, further including a video program signal decoder (35) for decoding video program signal data of the data received from the tuner and demodulation means (22) and transmitting the decoded data representing the present date to the first microcomputer (26).

8. An auto-time setting method comprising the steps of:
synchronizing, receiving and demodulating broadcasting signals using tuner and demodulation means;
slicing teletext data in package units of the data received from the tuner and demodulation means using data slicing means;
converting the teletext data received from the data slicing means into literal and numeric data using teletext processing means;
controlling the teletext processing means using a first microcomputer;
searching the data received from the teletext processing means for any errors using a second microcomputer;
on finding no errors, applying the data to the first microcomputer;
on finding any errors, informing of the development of errors to the first microcomputer and using a phase locked loop under the control of the first microcomputer to control the tuner and demodulation means to change synchronization frequency; and
setting the present time with the literal and numeric data received from the teletext processing means, using the first microcomputer.

9. The method of claim 8 further comprising the steps of:
generating clocks using clock generating means forming part of the teletext processing means; and
applying the clocks to the data slicing means to slice only the teletext data containing data on time under the control of the first microcomputer,
the step of converting the teletext data further comprising the steps of:
converting the teletext data received from the data slicing means into literal and numeric data using a data acquisition means forming part of the teletext processing means;
storing the literal and numeric data received from the data acquisition means in a data register forming part of the teletext processing means and transmitting the stored data under the control of the first microcomputer; and
carrying out an interface function of the data and control signals between the first microcomputer and the data register using bus interface means forming part of the teletext processing means, the second microcomputer being arranged to search the data received from the bus interface for any errors.

## Patentansprüche

1. Vorrichtung zur automatischen Zeiteinstellung, mit:
einer Empfangs- und Demodulationseinrichtung (22) zum Synchronisieren, Empfangen und Demodulieren von Rundfunksignalen;
einer Datenabtrenneinrichtung (23) zum Abteilen von Teletextdaten der von der Empfangs- und Demodulationseinrichtung empfangenen Daten in Pakete;
einer Teletextverarbeitungseinrichtung (24) zum Umwandeln der von der Datenauteileinrichtung empfangenen Daten in Text- und Zahlendaten;
einem ersten Mikrocomputer (26) zum Steuern der Teletextverarbeitungseinrichtung und zum Einstellen der aktuellen Zeit mit Hilfe der von der Teletextverarbeitungseinrichtung empfangenen Text- und Zahlendaten;
einem zweiten Mikrocomputer (25) zum Durchsuchen der von der Teletextverarbeitungseinrichtung (24) empfangenen Daten nach Fehlern, wobei die Daten dem ersten Mikrocomputer (26) zugeführt werden, wenn keine Fehler gefunden werden, und dem ersten Mikrocomputer das Auftreten von Fehlern gemeldet wird, wenn Fehler gefunden werden, und
einer Regelschleife (28) zum Steuern der Empfangs- und Demodulationseinrichtung (22), um die Synchronisationsfrequenz durch den ersten Mikrocomputer (26) gesteuert zu ändern, wenn Signale vom zweiten Mikrocomputer (25), die das Auftreten von Fehlern melden, empfangen werden.

2. Vorrichtung zur automatischen Zeiteinstellung nach Anspruch 1, ferner mit Tastenfeldmitteln (15), die an den ersten Mikrocomputer (26) angeschlossen sind, wobei ein Benutzer mit den Tastenfeldmitteln die aktuelle Zeit manuell einstellen kann.

3. Vorrichtung zur automatischen Zeiteinstellung nach Anspruch 2, bei welcher der erste Mikrocomputer (26) die Teletextverarbeitungseinrichtung (24) so steuert, daß die Text- und Zahlendaten gemäß dem aktuellen Zeiteinstellsignal, das von den Tastenfeldmitteln (15) empfangen wird, übertragen werden, und die aktuelle Zeit aufgrund der von der Teletextverarbeitungsrichtung (24) empfangenen Text- und Zahlendaten einstellt.

4. Vorrichtung zur automatischen Zeiteinstellung nach Anspruch 1, bei der die Teletextverarbeitungseinrichtung (24) eine Teletextverarbeitung (141) zum Umwandeln der in Paketen vorliegenden Teletextdaten, die von der Datenabtrenneinrichtung empfangen werden, in Text- und Zahlendaten unter der Steuerung des ersten Mikrocomputers und eines Speichers (142) zum Speichern der Teletextdaten in Paketen unter der Steuerung der Teletext-Verarbeitung umfaßt.

5. Vorrichtung zur automatischen Zeiteinstellung nach Anspruch 1, bei welcher der erste Mikrocomputer (26) Zeit- und Datumsfehler beseitigt, indem er die Teletextverarbeitungseinrichtung (24) so steuert, daß sie dem ersten Mikrocomputer Text- und Zahlendaten zuführt, und die aktuelle Zeit und das aktuelle Datum auf der Grundlage der von der Teletextverarbeitungseinrichtung empfangenen Text- und Zahlendaten periodisch einstellt.

6. Vorrichtung zur automatischen Zeiteinstellung nach Anspruch 1, bei der die Teletextverarbeitungseinrichtung (24) folgendes aufweist:
eine Takterzeugungseinrichtung (244) zum Erzeugen von Takten und Anlegen der Takte an die Datenabtrenneinrichtung unter der Steuerung des ersten Mikrocomputers (26), um nur die Teletextdaten abzutrennen, die zeitbezogene Daten enthalten;
eine Datenerfassungseinrichtung (241) zum Umwandeln der von der Datenaufeileinrichtung empfangenen Teletextdaten in Text- und Zahlendaten;
ein Datenregister (242) zum Speichern der von der Datenerfassungseinrichtung empfangenen Text- und Zahlendaten und Übertragen der gespeicherten Daten unter der Steuerung des ersten Mikrocomputers; und
eine Busschnittstelleneinrichtung (243) zum Durchführen einer Schnittstellenfunktion für die Daten und Steuerungssignale zwischen dem ersten Mikrocomputer und dem Datenregister,
wobei der zweite Mikrocomputer (25) dazu eingerichtet ist, die von der Busschnittstelle empfangenen Daten nach Fehlern zu durchsuchen.

7. Vorrichtung zur automatischen Zeiteinstellung nach Anspruch 6, die zudem einen Videosignaldecoder (35) zum Decodieren von Videosignaldaten der von der Empfangs- und Demodulationseinrichtung (22) empfangenen Daten und zum Übertragen der decodierten Daten, die das aktuelle Datum darstellen, an den ersten Mikrocomputer (26) umfaßt.

8. Verfahren zur automatischen Zeiteinstellung, das die folgenden Schritte umfaßt:
Synchronisieren, Empfangen und Demodulieren von Rundfunksignalen unter Verwendung einer Empfangs- und Demodulationseinrichtung;
Aufteilen von Teletextdaten der Daten, die von der Empfangs- und Demodulationseinrichtung empfangen werden, in Pakete unter Verwendung der Datenabtrenneinrichtung;
Umwandeln der von der Datenabtrenneinrichtung empfangenen Daten in Text- und Zahlendaten mittels der Teletextverarbeitungseinrichtung;
Steuern der Teletextverarbeitungseinrichtung mittels eines ersten Mikrocomputers;
Durchsuchen der von der Teletextverarbeitungseinrichtung empfangenen Daten nach Fehlern mittels eines zweiten Mikrocomputers;
Zuführen der Daten an den ersten Mikrocomputer, wenn keine Fehler gefunden wurden;
Melden des Auftretens von Fehlern an den ersten Mikrocomputer und Verwendung einer Regelschleife unter der Steuerung des ersten Mikrocomputers, um die Empfangs- und
Demodulationseinrichtung so zu steuern, daß die Synchronisationsfrequenz geändert wird, wenn Fehler gefunden werden, und
Einstellen der aktuellen Zeit mit den Text- und Zahlendatenn, die von der Teletextverarbeitungseinrichtung empfangen werden, unter Verwendung des ersten Mikrocomputers.

9. Verfahren nach Anspruch 8, das ferner die folgenden Schritte umfaßt:
Erzeugen von Takten mit einer Takterzeugungseinrichtung, die einen Teil der Teletextverarbeitungseinrichtung bildet, und
Anlegen der Takte an die Datenabtrenneinrichtung unter der Steuerung des ersten Mikrocomputers, um nur die Teletextdaten abzutrennen, die zeitbezogene Daten enthalten,
wobei der Schritt des Umwandelns der Teletextdaten zudem noch folgende Schritte umfaßt:
Umwandeln der von der Datenabtrenneinrichtung empfangenen Teletextdaten in Text- und
Zahlendaten unter Verwendung einer Datenerfassungseinrichtung, die Teil der Teletextverarbeitungseinrichtung ist;
Speichern der von der Datenerfassungseinrichtung empfangenen Text- und Zahlendaten in einem Datenregister, das Teil der Teletextverarbeitungseinrichtung ist, und Übertragen der gespeicherten Daten unter der Steuerung des ersten Mikrocomputers, und
Durchführen einer Schnittstellenfunktion für die Daten- und Steuerungssignale zwischen dem ersten Mikrocomputer und dem Datenregister unter Verwendung einer Busschnittstelleneinrichtung, die Teil der Teletextverarbeitungseinrichtung ist, wobei der zweite Mikrocomputer dazu eingerichtet ist, die von der Busschnittstelle empfangenen Daten nach Fehlern zu durchsuchen.

## Revendications

1. Un dispositif de réglage automatique de l'heure, comprenant :
- des moyens de syntonisation et de démodulation (22) destinés à synchroniser, recevoir et démoduler des signaux de radiodiffusion ;
- des moyens de découpage de données (23) destinés à découper des données de télétexte en unités de paquets des données reçues des moyens de syntonisation et de démodulation ;
- des moyens de traitement de télétexte (24) destinés à convertir les données de télétexte reçues des moyens de découpage de données en données littérales et numériques;
- un premier micro-ordinateur (26) pour contrôler les moyens de traitement de télétexte et pour régler l'heure de l'instant avec les données littérales et numériques reçues des moyens de traitement de télétexte ;
- un deuxième micro-ordinateur (25) pour rechercher les erreurs dans les données reçues des moyens de traitement de télétexte (24) de manière à appliquer les données au premier micro-ordinateur (26) lorsqu'aucune erreur n'est trouvée et pour informer le premier micro-ordinateur du développement d'erreurs lorsque des erreurs sont trouvées ; et
- une boucle (28) à verrouillage de phase pour contrôler les moyens de syntonisation et de démodulation (22) afin de modifier la fréquence de synchronisation sous le contrôle du premier micro-ordinateur (26) lors de la réception des signaux informant du développement d'erreurs provenant du deuxième micro-ordinateur (25).

2. Le dispositif de réglage automatique de l'heure selon la revendication 1, comprenant en outre, des moyens formant matrice de touches (15) connectés au premier micro-ordinateur (26), lesdits moyens formant matrice de touches permettant à un utilisateur de régler manuellement l'heure de l'instant.

3. Le dispositif de réglage automatique de l'heure selon la revendication 2, dans lequel le premier micro-ordinateur (26) contrôle les moyens de traitement de télétexte (24) afin de transmettre les données littérales et numériques en correspondance au signal de réglage de l'heure de l'instant reçu des moyens formant matrice de touches (15) et règle l'heure de l'instant en se basant sur les données littérales et numériques reçues des moyens de traitement de télétexte (24).

4. Le dispositif de réglage automatique de l'heure selon la revendication 1, dans lequel les moyens de traitement de télétexte (24) comprennent un traitement de télétexte (141) pour convertir les données de télétexte en unités de paquets reçues des moyens de découpage de données en données littérales et numériques sous le contrôle du premier micro-ordinateur et une mémoire (142) pour mémoriser les données de télétexte en unités de paquets sous le contrôle du processeur de télétexte.

5. Le dispositif de réglage automatique de l'heure selon la revendication 1, dans lequel le premier micro-ordinateur (26) retire les erreurs d'heure et de date en contrôlant les moyens de traitement de télétexte (24) afin d'appliquer les données littérales et numériques au premier micro-ordinateur et en réglant l'heure et la date de l'instant en se basant sur les données littérales et numériques reçues des moyens de traitement de télétexte, de manière périodique.

6. Le dispositif de réglage automatique de l'heure selon la revendication 1, dans lequel les moyens de traitement de télétexte (24) comprennent :
- des moyens de génération d'horloge (244) destinés à générer des horloges et à appliquer les horloges aux moyens de découpage de données afin de découper uniquement les données de télétexte contenant des informations concernant l'heure sous le contrôle du premier micro-ordinateur (26);
- des moyens d'acquisition de données (241) destinés à convertir les données de télétexte reçues des moyens de découpage de données en données littérales et numériques;
- un registre de données (242) pour mémoriser les données littérales et numériques reçues des moyens d'acquisition de données et pour transmettre les données mémorisées sous le contrôle du premier micro-ordinateur; et
- des moyens formant interface de bus (243) destinés à réaliser une fonction d'interface des données et des signaux de contrôle entre le premier micro-ordinateur et le registre de données, le deuxième micro-ordinateur (25) étant agencé afin de rechercher les erreurs dans les données reçues de l'interface de bus.

7. Le dispositif de réglage automatique de l'heure selon la revendication 6, comprenant en outre, un décodeur de signal de programme vidéo (35) pour décoder les données de signal de programme vidéo des données reçues des moyens de syntonisation et de démodulation (22) et pour transmettre les données décodées représentant la date de l'instant au premier micro-ordinateur (26).

8. Un procédé de réglage automatique de l'heure, comprenant les étapes consistant :
- à synchroniser, recevoir et démoduler les signaux de diffusion en utilisant des moyens de syntonisation et de démodulation ;
- à découper les données de télétexte en unités de paquets des données reçues des moyens de syntonisation et de démodulation en utilisant les moyens de découpage de données ;
- à convertir les données de télétexte reçues des moyens de découpage de données en données littérales et numériques en utilisant les moyens de traitement de télétexte;
- à contrôler les moyens de traitement de télétexte en utilisant un premier micro-ordinateur ;
- à rechercher les erreurs dans les données reçues des moyens de traitement de télétexte en utilisant un deuxième micro-ordinateur;
- lorsque aucune erreur n'est trouvée, à appliquer les données au premier micro-ordinateur;
- lorsque des erreurs sont trouvées, à informer le premier micro-ordinateur du développement d'erreurs et à utiliser une boucle à verrouillage de phase sous le contrôle du premier micro-ordinateur afin de contrôler les moyens de syntonisation et de démodulation afin de modifier la fréquence de synchronisation; et
- à régler l'heure de l'instant avec les données littérales et numériques reçues des moyens de traitement de télétexte, en utilisant le premier micro-ordinateur.

9. Le procédé selon la revendication 8, comprenant en outre, les étapes consistant :
- à générer des horloges en utilisant des moyens de génération d'horloge faisant partie des moyens de traitement de télétexte ; et
- à appliquer les horloges aux moyens de découpage de données afin de découper uniquement les données de télétexte contenant des données concernant l'heure sous le contrôle du premier micro-ordinateur ;
- l'étape de conversion des données de télétexte comprenant, de plus, les étapes consistant :
- à convertir les données de télétexte reçues des moyens de découpage de données en données littérales et numériques en utilisant des moyens d'acquisition de données faisant partie des moyens de traitement de télétexte ;
- à mémoriser les données littérales et numériques reçues des moyens d'acquisition de données dans un registre de données faisant partie des moyens de traitement de télétexte et à transmettre les données mémorisées sous le contrôle du premier micro-ordinateur ; et
- à exécuter une fonction d'interface des données et des signaux de contrôle entre le premier micro-ordinateur et le registre de données en utilisant des moyens formant interface de bus faisant partie des moyens de traitement de télétexte, le deuxième micro-ordinateur étant agencé afin de rechercher les erreurs dans les données reçues de l'interface de bus.
